# EUROPÄISCHE PATENTANMELDUNG

(11) **EP 0 960 800 A2**
(43) Veröffentlichungstag der Anmeldung: **01.12.1999**
(21) Anmeldenummer: 99810458.2
(22) Anmeldetag: 27.05.1999
(51) Int. Cl.: B62D 49/08, B60K 5/12

(54) **Verfahren und Vorrichtung zur Verminderung der Gefahr des Kippens von Fahrzeugen mit Fahrgestell und einem Aufbau**

(30) Priorität: 28.05.1998 EP 98810497; 19.06.1998 EP 98810562
(71) Anmelder: Aebli Johann-Peter Landmaschinen, 7214 Seewis-Pardisla (CH)
(72) Erfinder: Aebli, Johann-Peter, 7212 Seewis (CH); Bader, Hermann, 7260 Davos (CH)
(74) Vertreter: Riederer, Conrad A., Dr.

(57) **Zusammenfassung**

Bei einem Fahrzeug, z.B. einem Transporter (11), einer Motorschubkarre oder einem Motormäher (11'), wie er in der Landwirtschaft insbesondere in Berggebieten auf geneigtem Gelände eingesetzt wird, ist erfindungsgemäss eine Schwenkeinrichtung (19) zum Verschwenken des Lastenaufbaus (15), z.B. von Druckfass oder Mistzetter oder Ladebrücke, oder des Motors vorgesehen. Durch eine elektrische oder elektronische Steuerung, z.B. mit Neigungsschaltern, wird der Aufbau automatisch derart nach der Senkrechten (35) ausgerichtet (Pfeil 34'), dass die Senkrechte durch den Schwerpunkt (13) des verschwenkbaren Teils (15) innerhalb eines bestimmten maximalen Neigungswinkels nahe der Mitte zwischen den linken und rechten Rädern 17,18 die Standfläche 33 kreuzt.

## Beschreibung

### Technisches Gebiet der Erfindung

Die vorliegende Erfindung betrifft ein Verfahren und eine Einrichtung zur Verminderung der Gefahr des Kippens von Fahrzeugen mit einem Fahrgestell und einem Aufbau, insbesondere von landwirtschaftlichen Fahrzeugen, gemäss den Oberbegriffen der unabhängigen Ansprüche 1 und 5. Insbesondere betrifft die Erfindung ein Verfahren zur Verminderung der Gefahr des Kippens eines fahrbaren Motorgeräts mit einem Fahrgestell mit Rädern und einem Verbrennungsmotor, bei welchem Verfahren der laufende Motor je nach der Richtung der auf das Gerät wirkenden Schwer-/Fliehkraft wenigstens um eine Achse verschwenkt wird und dadurch seine Lage auf die Richtung der auf das Gerät wirkenden Kraft wenigstens annähernd ausgerichtet wird, bzw. ein Verfahren zur Verminderung der Gefahr des Kippens von Fahrzeugen mit einem Fahrgestell, Rädern und einem Aufbau, insbesondere von landwirtschaftlichen Transportern, bei welchem Verfahren abhängig von der Neigung des Fahrgestells gegenüber der auf das Fahrzeug wirkenden Schwer- und allenfalls Fliehkraft, das Fahrgestell mit Rädern und der Aufbau oder wenigstens ein Teil des Aufbaus gegeneinander um eine in Fahrtrichtung verlaufende Längsachse so verschwenkt werden, dass die Standfestigkeit des Fahrzeugs durch die Verschwenkung erhöht wird. Weiter betrifft die Erfindung ein Fahrzeug mit einer solchen Schwenkeinrichtung.

### Stand der Technik

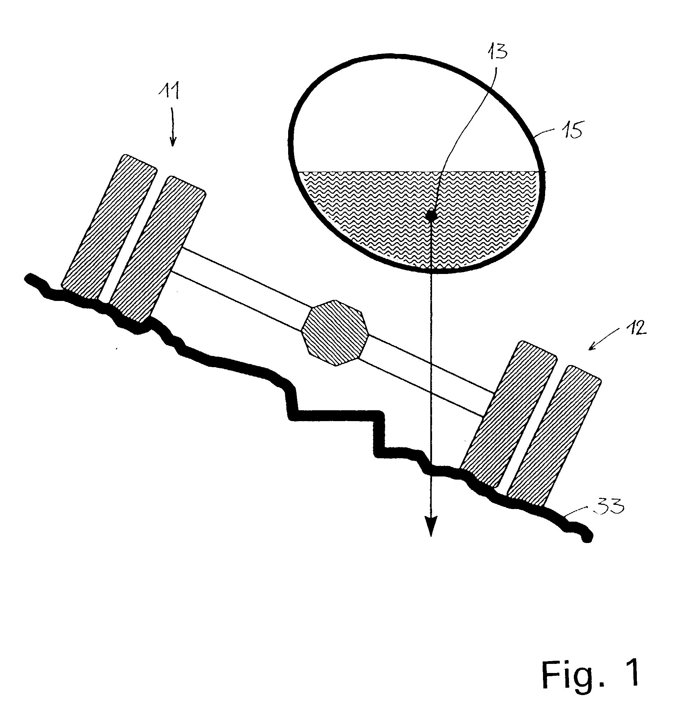

Mit sogenannten Transportern, d.h. landwirtschaftlichen Traktoren mit einem Lastenaufbau, z.B. einem Druckfass oder Mistzetter, wird auch in geneigtem Gelände quer zur Falllinie gefahren. Damit diese Gefährte nicht kippen, werden an den Hinterrädern Zwillingsräder moniert, welche die Standbreite wenigstens hinten vergrössern (siehe Figur 1). Dennoch kippen immer wieder solche Transporter um, wodurch Leib und Leben von Menschen gefährdet wird. Insbesondere bei Fahrten mit einem Druckfass (Figur 1) ist diese Gefahr gross, da der flüssige Inhalt auf die Talseite des quer zur Falllinie fahrenden Gefährts fliesst und dadurch der Schwerpunkt des Fahrzeugs sich schon bei relativ flacher Neigung stark an die Senkrechte über dem talseitigen Rad annähert. Auch andere Traktoren und Lastenanhänger, welche in geneigtem Gelände zum Einsatz kommen, werden mit Zwillingsrädern ausgerüstet, um die Kippgefahr zu verkleinern. Auch bei mit Zwillingsrädern ausgerüsteten Fahrzeugen ist nicht zu vermeiden, dass die talseitigen Räder wesentlich stärker belastet sind als die bergseitigen. Dies hat negative Auswirkungen auf die Bodenbelastung, welche dadurch unter den talseitigen Rädern erhöht ist, auf die Tendenz des Fahrzeugs, seitlich abzurutschen, und bei motorisierten Fahrzeugen zudem auf die Lenkbarkeit und die Traktion. Zudem ist es oft eine Frage der Bequemlichkeit, ob die Zwillingsräder für eine kurze Aktion in geneigtem Gelände montiert werden oder nicht.

Weiter ist bei Motorgeräten jedoch auch die Betriebssicherheit des Motors gefährdet. Bei Balkenmähern beispielsweise treten häufig Motorschäden auf, welche auf den Betrieb des Geräts auf geneigtem Gelände zurückzuführen sind. Durch die stetige Neigung des Motors in einer oder in der anderen Richtung ist nicht dauernd eine ausreichende Schmierung gewährleistet. Schmieröl kann sogar infolge der Schräglage bei der Ölstandkontrollöffnung austreten. Das Benzinniveau im Vergaser ist, wie im Tank, grossen Schwankungen unterlegen, so dass die Verbrennung nicht optimal geschieht, auch nicht optimal einstellbar ist. Ähnliche Probleme treten z.B. bei Gokarts aufgrund der Zentripetalkraft in den Kurven auf.

Aus der US 3,792,748 ist eine System zur Vermeidung des Kippens eines Fahrzeuges bekannt. Das Fahrzeug weist einen Rahmen, einen Antriebsmotor, seitlich angeordnete Antriebsräder und eine Fahrerplattform auf. Es ist vorgesehen, dass z.B. ein Mähwerk vorne am Fahrzeug angeordnet werden kann. Das System weist einen Parallelogramm-Mechanismus auf, mit welchen die Antriebsräder, der Motor und die Fahrerplattform auf seitlich geneigtem Gelände in die Senkrechte verschwenkt werden. Dadurch wird der gemeinsame Schwerpunkt dieser Teile mittig zwischen den Rädern gehalten. Die Verschwenkung von Aufbau und Rädern gegenüber dem sich mit dem Gelände neigenden Rahmen erfolgt durch eine Hydraulik, welche mittels zweier Neigungsschalter und einem Mehrwegventil gesteuert ist. Schliesst ein Neigungsschalter aufgrund der Neigung des Aufbaus, so werden die Ventile derart gestellt, dass der Aufbau mit hydraulischen Zylindern entgegen der Neigung bis in eine senkrechte Lage zurückverschwenkt wird. Die Richtungssteuerung des Fahrzeugs erfolgt über ein drittes, hinteres Rad.

Ein Gefährt mit einem sehr ähnlichen Aufbau ist in der US 4,126,322 beschrieben. Die Verschwenkung der Räder gegenüber dem Fahrgestell bewirkt, dass die Last des um eine relativ hoch gelegene Achse geschwenkten Aufbaus immer mittig zwischen die Auflagepunkte der Räder auf dem Gelände fällt. Die Verschwenkung der Räder aber benötigt einen Parallelogramm-Mechanismus mit vielen Gelenken und langem Gestänge. Ein solches Gestell mit einer Vielzahl von Gelenkpunkten birgt den Nachteil, dass die gewünschte Steifigkeit und Robustheit, welche in der Landwirtschaft und insbesondere bei z.T. schwer beladbaren Gefährten gefordert ist, mit wirtschaftlich vertretbarem Aufwand nicht erreicht werden kann. Ein Dreiradfahrzeug ist für die Landwirtschaft nicht geeignet, insbesondere ist bei Hangfahrten die Traktion und Bremsung auf wenigsten zwei talseitige, zueinander beabstandete Räder angewiesen. Wie die Lenkung eines vierräderigen Gefährts erreicht werden kann, ist aus dieser Schrift nicht ersichtlich.

Aus der DE 3045353 ist ein Balkenmäher bekannt, bei welchem die Neigung zum Umkippen dadurch vermieden wird, dass zwischen Motor und Antriebsachse eine Plattform vorgesehen ist, deren vorderes und hinteres Ende durch Schwenklager mit dem Gehäuse einer in Fahrtrichtung verlaufenden, über der Antriebsachse angeordneten Antriebswelle verbunden ist. Auf der Plattform ist der Motor befestigt. Er kann deshalb bei Querneigung des Mähers in die senkrechte Lage gebracht werden. In dieser Lage wird er mittels Bremsscheibe und Bremsklotz von Hand arretiert. Obwohl der Motor bis zu einer Neigung von etwa 45° senkrecht gestellt werden kann, verlagert sich mit zunehmender Neigung die Last des Motors auf das talseitige Rad. Es wird deshalb das Anbringen eines Zwillingsrads zeichnerisch vorgeschlagen.

### Aufgabe der Erfindung

Es ist deshalb Aufgabe der Erfindung, beim Stand der Technik vorliegende Nachteile zu überwinden. Die Räder des Fahrzeugs sollen möglichst gleichmässig belastet werden. Die Standfestigkeit des Fahrzeugs soll insbesondere automatisch erhöht werden, bevor das Fahrzeug in eine für das Kippen gefährliche Lage gerät.

### Beschreibung der Erfindung

Erfindungsgemäss wird dies bei dem Eingangs erwähnten Verfahren dadurch erreicht, dass der verschwenkbare Teil und das Fahrgestell mit Rädern entlang wenigstens einer Schiene derart gegeneinander verschoben werden, dass dabei der verschwenkbare Teil um eine Schwenkachse verschwenkt wird, die zwischen Fahrgestell und einer Geländeebene, welche die Räder gegenüber dem Aufbau tangiert, in dieser Ebene oder vorzugsweise in einem Nahbereich jenseits dieser Ebene verläuft.

Bei Fahrten mit zweiachsigen Fahrzeugen in der Falllinie des Geländes ist die Kippgefahr klein, weil solche Fahrzeuge in der Regel länger als breit sind. Hingegen ist die Kippgefahr bei Fahrten Quer zum Hang gross. Auch wenn in alle Richtungen verschwenkt werden könnte, so ist deshalb eine Verschwenkung vor allem um eine Längsachse des Fahrzeugs notwendig. Durch die Ausrichtung des Aufbaus entsprechend der Schwerkraft, oder durch das Neigen z.B. des Motors zum Zentrum einer gefahrenen Kurve hin, wird die Lage des Kraftvektors bezüglich des Aufbaus oder Motors möglichst konstant gehalten. Dadurch bleibt in Flüssigkeitstanks die Flüssigkeit unabhängig der Kraftrichtung praktisch immer gleich verteilt. Bei einem Motormäher z.B., welcher im Gelände meist quer zur Hangneigung gefahren wird, liegt daher dank der Verschwenkung des Motors um eine bodennahe Achse parallel zur Fahrtrichtung unabhängig von der Hangneigung der Schwerpunkt immer etwa senkrecht über einem Mittelbereich zwischen den Rädern.

Auch geschieht bei einem so verschwenkenden Motor die Schmierung und die Vergasung wie auch die Verbrennung unter nahezu identischen Bedingungen. Durch das Verschwenken um eine Achse in der Geländeebene wird zudem die Lage des Schnittpunktes zwischen dem Kraftvektor durch den Schwerpunkt des schwenkbaren Teils und der Geländeebene konstant gehalten. Durch diese Verschwenkung gegen die bergseitigen Räder hin bleibt daher der Schwerpunkt des verschwenkten Teils etwa in einer Vertikalebene über einer bodennahen Fahrzeugmittelachse. Dadurch wird die Last des verschwenkbaren Teils unabhängig von der Geländeneigung gleichmässig auf die linken und rechten Räder verteilt. Bei einer jenseits oder unterhalb der Geländeebene liegenden Schwenkachse wird der Schnittpunkt zwischen Kraftvektor und Geländeebene mit zunehmender Neigung zum bergseitigen Rad hin verschoben. Dadurch kann die Verlagerung des Schwerpunktes des nicht verschwenkten Teils, z.B. des parallel zum Gelände geneigten Fahrwerkes, kompensiert werden.

Vorteilhaft wird mit Sensoren die Richtung der Schwer-/Fliehkraft ermittelt und eine Verschwenkung des verschwenkbaren Aufbauteils entsprechend dieser Richtung automatisch bewirkt. Durch die Automation der Verschwenkung ist das Gefährt jederzeit ohne Vorbereitung und ohne Aufwand des Fahrers bereit für Fahrten in steilem Gelände. Die Automation könnte dadurch geschehen, dass die absolute Neigung des Fahrgestells gegenüber der Richtung der Gravitation, und allenfalls Fliehkraft bei Kurvenfahrten, ermittelt und die Verschwenkung danach berechnet und ausgeführt würde. Vorteilhaft werden jedoch die Sensoren mit dem verschwenkbaren Teil mitverschwenkt und lediglich eine Abweichung von der Normallage festgestellt, wobei eine solche Abweichung automatisch solange ein Verschwenken des Sensors auslöst bis der Sensor, und mit diesem auch der verschwenkbare Teil, in Normallage gegenüber der Schwer-/Fliehkraft steht. Dazu werden die einfacheren Steuerungsmittel benötigt, insbesondere ist eine solche Steuerung mit Neigungssensoren, bzw. Quecksilberschaltern erreichbar, und benötigt keine Recheneinheit und auch keine Sensoren zum Feststellen der Lage des verschwenkten Aufbaus gegenüber dem Fahrgestell.

Sensoren oder Schalter zum Ermitteln der relativen Lage sind jedoch für eine automatische Mittelstellung und das Ausschalten der Automatik in einer Stellung, bei der nicht weiter verschwenkt werden kann, zweckmässig.

Vorteilhaft ist ein Motor und eine oder mehrere hydraulische Pumpen am Motor vorgesehen. Mit diesen werden wenigstens ein damit verbundener hydraulischer Motor für Antriebsräder und/oder ein hydraulischer Motor oder Kolben für ein Arbeitsgerät und/oder wenigstens ein hydraulischer Motor oder Kolben für die Verschwenkung des Motors betrieben. Dadurch ist die Verschwenkbarkeit des Motors ohne allzu komplizierten technischen Aufwand realisierbar. Die Verbindung zwischen dem schwenkbaren Motor und den durch diesen angetriebenen, nicht mitschwenkenden Teilen kann nämlich durch Schläuche und Kabel hergestellt werden.

Die Hydraulik hat weiter die ihr eigenen Vorteile wie sanfte, stufenlose und individuelle Steuerbarkeit der Aggregate, elektronische Steuerbarkeit, Anpassungsfähigkeit an unterschiedliche Funktionen (z.B. Mähbalkenantrieb, Heuwenderantrieb, Schneeschleuderantrieb an einem einzigen Motorgerät). Anstelle der Hydraulik ist jedoch auch eine Pneumatik oder ein Stromaggregat mit Elektromotoren denkbar. Ein Elektromotor ist insbesondere für die Verschwenkung des verschwenkbaren Teils zweckmässig.

Ist das Fahrzeug mit einer Verstellpumpe und einer Füllpumpe für die Verstellpumpe ausgerüstet, so ist für die Verschwenkung des Motors vorteilhaft wenigstens ein von der Füllpumpe gespeister Kolben oder Hydraulikmotor vorgesehen. Die Füllpumpe liefert einen praktisch konstanten Druck, so dass die Verschwenkung mit einer konstanten Geschwindigkeit ausgeführt wird.

Für das Arbeitsgerät, z.B. den Mähbalken, die Schneeschleuder, ist vorteilhaft eine Zahnradpumpe vorgesehen, da diese eine von der Umdrehungszahl des Antriebs abhängige, jedoch konstante und hohe Leistung erbringt. Die Verstellpumpe ist zweckmässigerweise für den Radantrieb vorgesehen, so dass das Gefährt bei einer konstanten Motorumdrehungszahl mit unterschiedlichen Geschwindigkeiten gefahren werden kann. Wenn der Motor nicht verschwenkbar ist, kann jedoch der Antrieb auch über ein Getriebe erfolgen.

Vorteilhaft ist die Steuerung der Verschwenkung durch Neigungsschalter kontrolliert, welche am nach der Schwer/Fliehkraft auszurichtenden Teil angeordnet sind. Dadurch wird die Ausrichtung des verschwenkbaren Teils automatisch aufgrund der Abweichung aus dem Lot beziehungsweise aus der Kraftrichtung von Flieh- und Schwerkraft erreicht.

Vorteilhaft ist wenigstens ein Sensor, besser sind drei Sensoren zur Erkennung der Position des verschwenkbaren Teils gegenüber dem Fahrgestell und eine elektronische Steuerung der Verschwenkung vorgesehen. Mit diesen drei Sensoren ist zweckmässigerweise unabhängig von den Neigungsschaltern eine Endposition und vorzugsweise auch eine Mittelposition definiert. In einer Endstellung wird der Neigungsschalter, welcher ein Signal zur weiteren Verschwenkung des verschwenkbaren Teils über diese Endstellung hinaus gibt, deaktiviert.

Vorteilhaft ist der verschwenkbare Teil mit Rollen auf einer gewölbten Führungsschiene gelagert. Diese kann einen sehr tiefen Kurvenmittelpunkt aufweisen, so dass die Bodenfreiheit gewährt bleibt, während das Schwenkteil um eine Achse in Bodennähe verschwenkbar ist. Zudem lässt sich dieser verschwenkbare Teil durch einfaches Verschieben auf der Führungsschiene, z.B. mit wenigstens einem zweiseitigen oder zwei einseitigen hydraulischen Kolben, wenigstens einer Schnecke, einem Zahnrad mit Zahnstange oder einem Reibrad, verschwenken. Die Wölbung der Führungsschiene ist auf die Platzverhältnisse zwischen Schwenkteil und Fahrgestell und die maximal notwendige Verschwenkbarkeit abgestimmt.

Alternativ kann das Schwenkteil (Aufbau/Motor) auch zueinander beabstandete, seitlich gegenüberliegende, gegenüber dem Schwenkteil verschwenkbare Lagerungen, z.B. Wagen oder Schlitten, aufweisen, welche in zwei gegeneinander zur Mitte hin ansteigenden, sich allenfalls überschneidenden Schienen geführt sind. Dadurch kann der Schwerpunkt des Schwenkteils in der Mittelposition in einem kleineren Abstand zur Geländeebene liegen als bei einer nach oben gewölbten Schiene, und die Verlagerung des Schwerpunktes des Schwenkteils kann praktisch parallel zur Geländeebene geschehen.

Bei einem Motorfahrzeug sind u.U. die Bedienungs- und Steuerelemente, gegebenenfalls mit Sitz um eine in Fahrtrichtung verlaufende Achse zusammen mit dem übrigen Schwenkteil verschwenkbar. Das Schwenkteil umfasst alle verschwenkbaren Teile, z.B. Motor und/oder Lastenaufbau. Bei einem einachsigen Motormäher sind entsprechend die Bedienungselemente wie Lenkstange und Schalter, Getriebe-Schaltstöcke etc. immer entsprechend der aufrecht hinter dem Mäher hergehenden Bäuerin ausgerichtet. Dies hat einen positiven Einfluss auf die Körperhaltung Geräteführerin. Bei einem zweiachsigen Transporter hingegen kann die ganze Fahrerkabine verschwenkbar sein. Es kann alternativ auch lediglich der Lastenaufbau, z.B. der Mistzetter oder das Jauchefass verschwenkbar sein.

Die Verschwenkeinrichtung kann bei der Konstruktion eines neuen Gefährts oder Aufbaus von Anfang an vorgesehen sein, oder sie kann als Nachrüstteil zur nachträglichen Umrüstung bestehender Fahrzeuge angeboten werden. Insbesondere bei Transportern mit wechselbarem Aufbau ist ein derartiges Nachrüstteil relativ einfach herzustellen und zwischen das Fahrgestell und den Aufbau einzufügen.

Vorteilhaft sind bei einem einachsigen Fahrzeug die Bedienungs- und Steuerelemente zusammen mit dem durch den Motor angetriebenen Arbeitsgerät um eine quer zur Fahrtrichtung verlaufende Achse gegenüber dem Motor verschwenkbar. Dadurch lässt sich der Motor zusammen mit seinem Support auch bei Fahrten in Neigungsrichtung des Geländes bezüglich der Senkrechten ausrichten.

Hat das Gerät angetriebene Räder, so ist vorteilhaft eine für jedes einzelne Rad individuelle Steuerung des Antriebs abhängig von der Richtung der auf den Motor wirkenden Schwerkraft vorgesehen. Dadurch ist es möglich, der Tendenz des quer zum Steilhang fahrenden Gefährts zur Falllinie hin abzudrehen, entgegenzuwirken.

Beispiele für die Anwendung der erfindungsgemässen Schwenkeinrichtung sind: Motormäher, Kleintraktoren für Golfplätze, Rebbergtraktoren, Transporter, Geländefahrzeuge, Heuraupen, Schneeschleudern, Motorschubkarren, Baumaschinen, Gokarts, Rennautos, Pistenfahrzeuge. Je nach Arbeitseinsatz des Fahrzeugs ist eine Verschwenkung in einer oder der anderen Richtung sinnvoll. Gelegentlich ist auch eine Verschwenkung in zwei Richtungen zweckmässig, so z.B. bei Motorschubkarren und Feuerleitern oder bei einem Gefährt mit auswechselbarem Arbeitsgerät, z.B. mit Mähbalken und Heuraupe. Gemäht wird nämlich quer zum Hang und Heumahden werden in der Falllinie angelegt. Daher muss beim Mähen eine Verschwenkung in die andere Richtung geschehen als beim Zusammenrechen des Heus.

### Kurzbeschrieb der Figuren

Es zeigt:
- Fig. 1: eine schematische Darstellung eines Querschnitts eines Transporters mit Druckfass im Gelände ohne erfindungsgemässe Verschwenkeinrichtung für den Aufbau, mit Zwillingsrädern gem. Stand der Technik,
- Fig. 2: eine schematische Darstellung eines Querschnitts eines Transporters im Gelände mit erfindungsgemäss verschwenktem Druckfass,
- Fig. 3: einen schematischen Querschnitt durch eine erfindungsgemässe Verschwenkeinrichtung auf einem Transporter, mit Druckfass in Mittelstellung,
- Fig. 4: eine schematische Darstellung eines erfindungsgemässen Motormähers,
- Fig. 5: ein Motormäher mit zwei sich kreuzenden, geradlinigen Schienen,
- Fig. 6: ein solcher mit zwei nach unten gewölbten sich berührenden Schienen,
- Fig. 7: eine Variante zur Verschwenkeinrichtung gemäss Fig. 3, wobei der Transporter auf ebenem Gelände steht und das Druckfass leicht nach rechts verschwenkt ist,
- Fig. 8: die Variante gem. Figur 7, mit Druckfass in leicht nach rechts verschwenkter Stellung, wobei der Transporter auf stärker nach links abfallendem Gelände steht,
- Fig. 9: die Variante gem. Figur 7, mit Druckfass in rechter Endstellung, wobei die Geländeneigung grösser ist als die Verschwenkung des Druckfasses,
- Fig. 10: die Variante gem. Fig. 7 mit Druckfass in Mittelstellung,
- Fig. 11: ein Schaltschema für die Steuerung der Verschwenkung,
- Fig. 12: ein anderes Schaltschema für die Steuerung der Verschwenkung, in einer Schaltstellung wie es bei einem Transporter mit Aufbau in der Stellung gemäss Figur 8 und Automatikeinstellung der Fall ist,

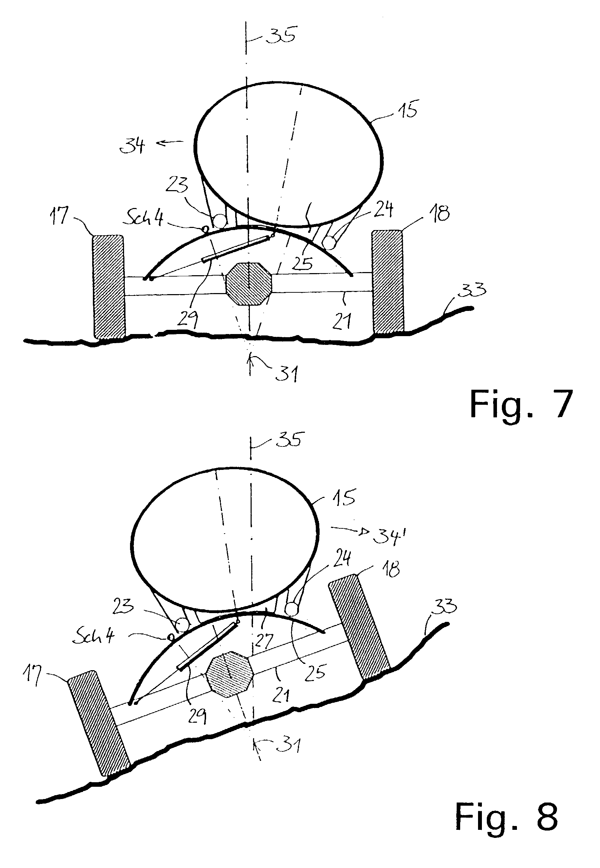

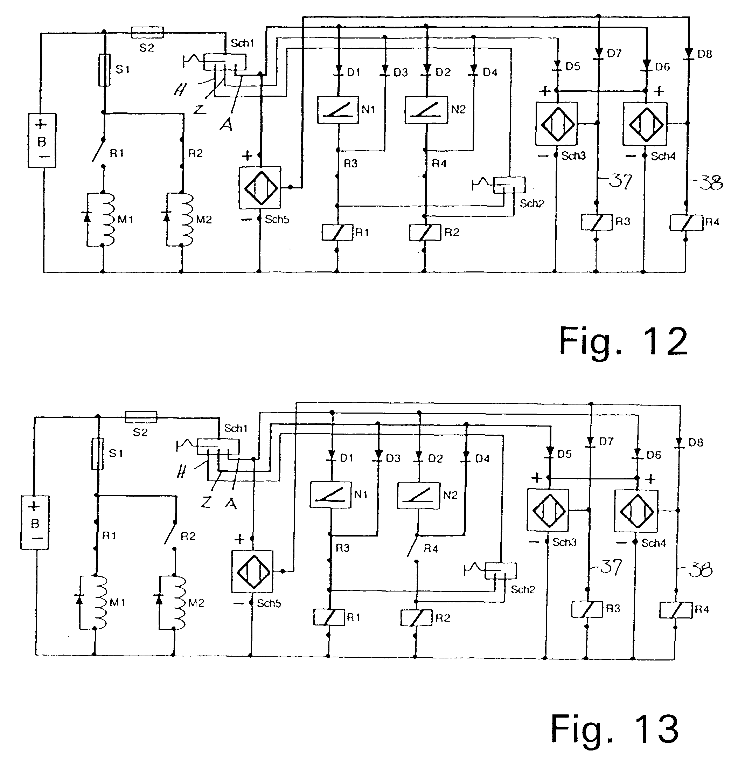

- Fig. 1 3: das Schaltschema gem. Figur 12, jedoch in einer Schaltstellung wie es bei einem Transporter mit Aufbau in der Stellung gemäss Figur 7, 8 oder 9 und automatischer Mittelstellung der Fall ist.

### Beschrieb der Ausführungsbeispiele

Gemäss dem Stand der Technik wird in der Praxis einem Kippen des Gefährts in geneigtem Gelände durch das Verbreitern der Standfläche mit Doppel- oder Zwillingsrädern 11,12 gemäss der Figur 1 entgegengewirkt. In Figur 1 ist aber auch klar erkennbar, dass die talseitigen Räder 12 massiv stärker belastet sind als die bergseitigen Räder 11, da die vertikale Gravitation durch den Schwerpunkt 13 der Hauptlast, im Beispiel der mit Jauche halb gefüllte Drucktank 15, sehr nahe an den talseitigen Rädern 12 vorbeizielt.

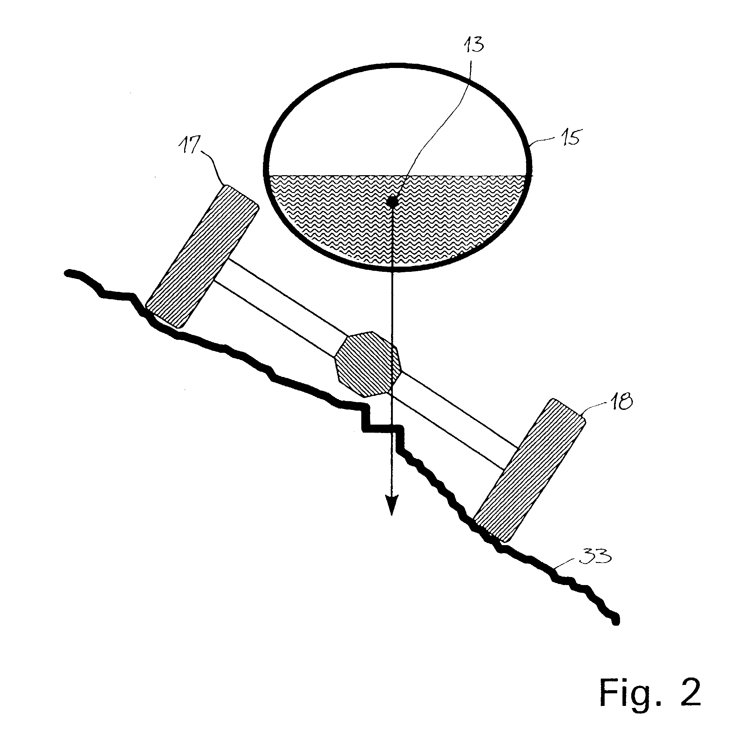

Bei einer erfindungsgemässen Verschwenkung des Druckfasses 15 gemäss Figur 2 jedoch, ist trotz stärker geneigtem Terrain die Linie der Schwerkraft näher der Mitte zwischen den beiden Rädern 17,18. Doppelräder erübrigen sich und die Belastung der bergseitigen und talseitigen Räder 17,18 ist gleichmässiger. Dadurch ist auch die Traktion gleichmässiger, die bergseitigen Räder 17 drehen weniger rasch durch und die Lenkung des Fahrzeugs ist sicherer. Wenn die bergseitigen Räder 17 nicht durchdrehen, wird auch keine Differenzialsperre benötigt. Daher ist die Lenkung des Fahrzeuges nochmals leichter.

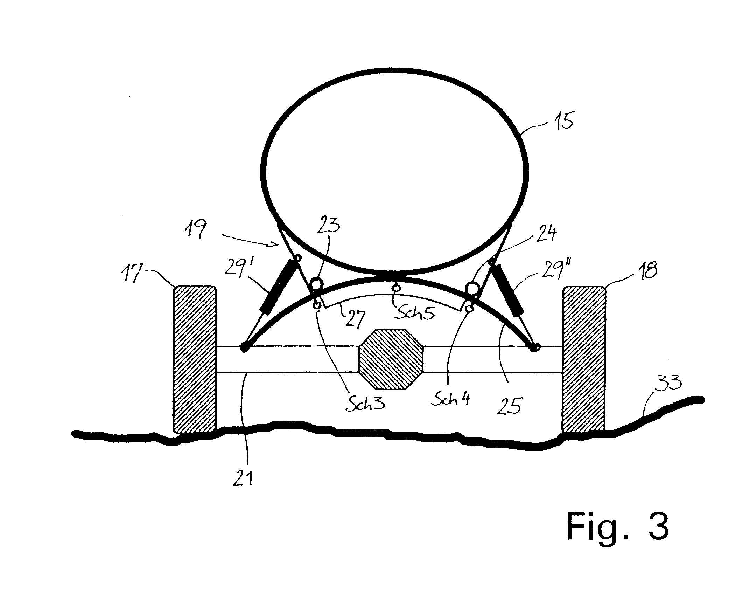

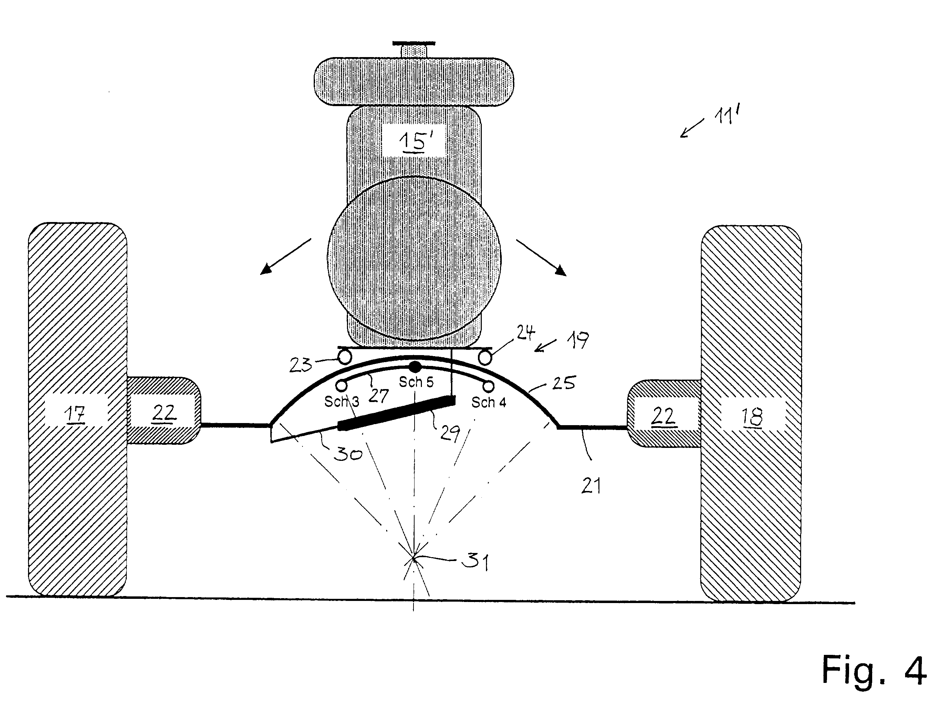

Bei einem Flüssigkeitstank 15 mit etwa halber Füllung wirkt sich eine Verschwenkung des Lastenaufbaus doppelt aus, da die Flüssigkeit ohne Verschwenkung, wie dies aus Figur 1 deutlich wird, immer auf die Talseite des Tankes 15 schwappt, hingegen bei einer Verschwenkung des Tankes 15 zentral im Tank 15 liegen bleibt (Figur 2). In Figur 4 ist der gleiche Schwenk-Mechanismus am Beispiel eines Motormähers dargestellt. Der Motormäher 11' in Figur 4, dessen Darstellung als eine Prinzipskizze zu verstehen ist, und dessen Ausführung unterschiedliche Formen haben kann, weist eine Erzeugereinheit 15', gewöhnlich eine durch einen Benzinmotor angetriebene Hydraulikpumpe, zwei Antriebsräder 17,18, und einen Verschwenkmechanismus 19 am Chassis 21 des Mähers 11' auf. Für den Antrieb der Räder 17,18 ist bei jedem Rad ein hydraulischer Radantrieb 22 vorgesehen. Die Hydraulikpumpe der Erzeugereinheit 15' treibt die Radantriebe 22 an. Solche Antriebe sind bei Mähern und anderen landwirtschaftlichen Geräten und Fahrzeugen sowie Pistenfahrzeugen etc. bereits Stand der Technik, weshalb auf den hydraulischen Antrieb im einzelnen nicht eingegangen zu werden braucht. Analog dazu könnte die Erzeugereinheit 15' auch ein Stromaggregat oder eine Pressluftpumpe aufweisen und die Räder 17,18 und andere angetriebene Teile des Mähers 11' entsprechend elektrisch oder pneumatisch angetrieben werden. Der Schwenkmechanismus in Figur 3 und 4 ist im Wesentlichen identisch und wird daher im Folgenden mit Bezug auf beide Figuren beschrieben. Der relativ schwere Lastenaufbau 15 bzw. die relativ schwere Erzeugereinheit 15' ist durch den Schwenkmechanismus 19 verschwenkbar. Dazu ist das Schwenkteil 15,15' (Lastenaufbau oder Motor) mit Rollen 23,24 auf einer gebogenen Führungsschiene 25 gelagert. Die Rollen 23,24 garantieren in der Praxis mit weiteren Rollen zusammen, dass das Schwenkteil 15,15' leicht verschiebbar ist, jedoch nicht aus der Führungsschiene 25 springen kann und satt daran befestigt ist. Die Führungsschiene 25 ist Teil des Chassis 21. Am Chassis 21 ist ein Schaltglied 27 angeordnet, welches die am Schwenkteil 15,15' angeordneten Schalter Sch3 bis Sch5 schaltet. Das Schaltglied 27 und die Schalter Sch3 bis Sch5 sind sehr unempfindlich, wenn es sich um eine Metallstange und um drei Näherungssensoren handelt, welche die Anwesenheit oder Abwesenheit der Metallstange wahrnehmen. Zur Verschwenkung des Schwenkteil 15,15' sind zwei gegeneinander wirkende hydraulische Zylinder 29',29" (Fig. 3) oder ein zweiseitig aktivierbarer hydraulischer Zylinder 29 vorgesehen, welche auf einer Seite mit dem Schwenkteil 15,15' und auf der anderen Seite durch den Stössel oder Kolben 30 mit dem Chassis 21 verbunden sind, oder umgekehrt. Durch Öffnen des Ventils des Zylinders 29' wird der Lastenaufbau 15 gegenüber dem Chassis 21 nach rechts, durch Öffnen des Ventils des anderen Zylinders 29" nach links verschwenkt. In Figur 4 ist lediglich ein Zylinder 29 dargestellt. Durch den in beide Richtungen aktivierbaren Zylinder 29 ist jedoch die gleiche Wirkung zu erzielen, indem das eine oder das andere Ventil geöffnet wird.

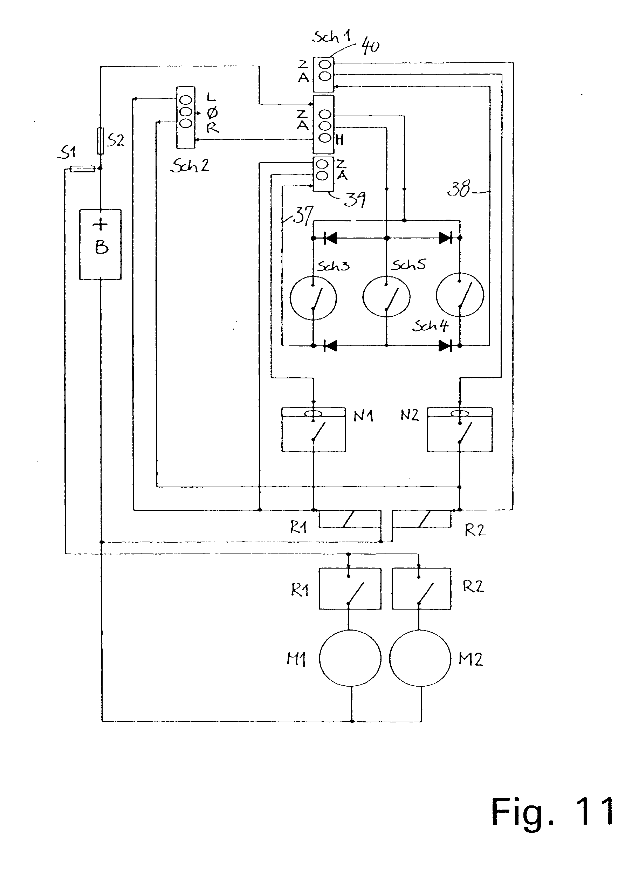

Für die Steuerung der Ventile sind die drei Näherungsschalter Sch3,Sch4,Sch5 und zwei Neigungsschalter N1,N2 vorgesehen (siehe Fig. 11 bis 13). Die Arbeitsweise der Steuerung ist später beschrieben. Die Näherungsschalter oder Sensoren Sch3 und Sch4 sind in der dargestellten Mittelposition deaktiviert, lediglich der mittlere Sensor Sch5 ist durch das Schaltglied 27 aktiviert. Die in den Figuren 11 bis 13 dargestellten Neigungsschalter N1 und N2 schalten je nach Stellung des Aufbaus 15 oder der Erzeugereinheit 15' bezüglich der Senkrechten ein oder aus.

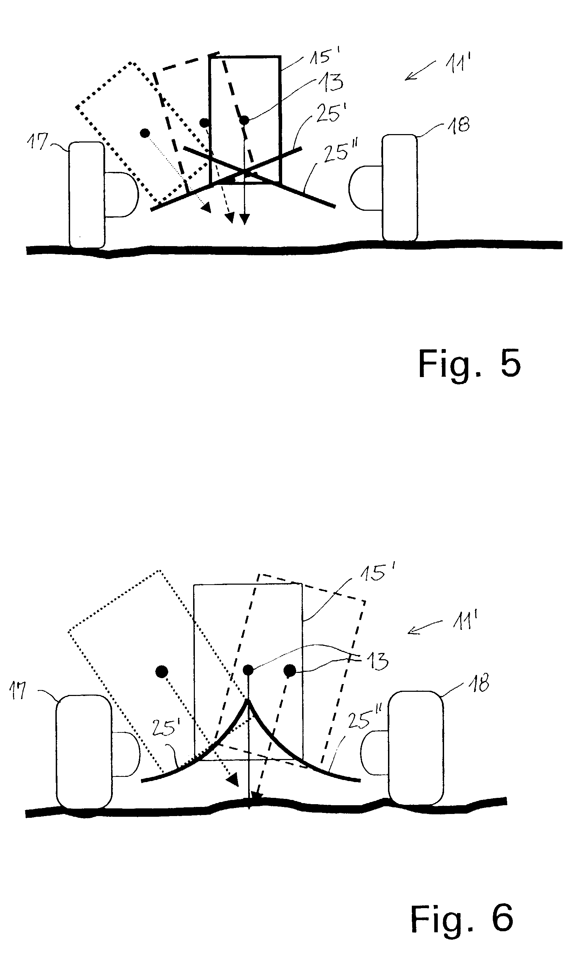

In Figur 5 und 6 sind zwei Varianten zu der in den übrigen Figuren dargestellten nach oben kreisförmig gewölbten Führungsschiene 25 dargestellt. Die Führungsschiene 25',25" kann auch für zwei mit Abstand zueinander an der verschwenkbaren Last 15' drehbar befestigte Schlitten oder Wagen (nicht dargestellt) getrennt sein. Im Beispiel ist die Last der Motor 15' eines einachsigen Fahrzeugs 11', insbesondere eines Bergmähers. Der Wagen auf der linken Seite des Motors 15' ist auf einer Schiene 25' verschiebbar angeordnet, welche von links unten nach rechts oben ansteigt, während der Wagen auf der rechten Seite des Motors 15' auf einer zweiten Schiene 25" angeordnet ist, welche von links nach recht abfällt. Dadurch ist die Bewegungslinie der Schwerpunktes 13 nahezu parallel zur Geländeebene, und der Drehpunkt der Verschwenkung liegt dennoch in etwa in dieser Geländeebene. Verschiedene Motorpositionen sind in den beiden Figuren mit unterschiedlichen Linien dargestellt. Die Vektoren der Schwerkraft zielen in den verschiedenen Positionen etwa auf einen gemeinsamen Schwenkpunkt unter der Erdoberfläche. Der Schwenkpunkt braucht jedoch kein auch nur annähernd geometrischer Punkt zu sein, sondern kann ein Bereich sein. Der Schnittpunkt zwischen den Vektoren durch den Schwerpunkt in zwei entgegengesetzten Positionen kann sich daher auf einer Mittelnormalebene zur Radachse in verschieden Punkten schneiden.

Die Schienen 25',25" können geradlinig oder, vorzugsweise nach unten gewölbte, Kreisabschnitte sein. Sie können sich in der Mitte zwischen den Rädern annähern, berühren oder gar kreuzen. Sind die Schienen 25',25" nach unten gewölbt, kann damit erreicht werden, dass der Schwerpunkt 13 während einer Verschwenkung des Motors 15' parallel zur Geländeebene oder Radachse verschoben wird. Bei starker Krümmung der Schienen kann der Schwerpunkt in der Mittelstellung des Motors 15' sogar den kleinsten Abstand zur Geländeebene aufweisen. Dieser kleine Abstand des Schwerpunktes zur Geländeebene ist besonders bei einachsigen Fahrzeugen von Vorteil. Bei Fahrten bergauf oder bergab ist die unerwünschte Schwerpunktverschwenkung um die Radachse nämlich umso grösser, je höher der Schwerpunkt 13 angeordnet ist. Mit hohem Schwerpunkt 13 kann das Fahrzeug daher bei Bergfahrt nach hinten kippen, während bei Talfahrt die Last nach vorne kippt und z.B. durch den Mähbalken abgestützt werden muss.

Eine zweckmässige Sensorenanordnung ist auch bei diesen Schienenanordnungen ohne weiteres möglich, wobei das Schaltglied unter Umständen besser plattenförmig als stabförmig ausgebildet ist.

Eine Variante zu der in den Figuren 3 und 4 beschriebenen Sensorenanordnung ist in den folgenden Figuren dargestellt. Dabei sind die Sensoren Sch3, Sch4, Sch5 nicht am verschwenkbaren Teil sondern am Fahrgestell 21 fest montiert und das Schaltglied 27 wird beim Verschwenken mit dem Aufbau 15 an den Sensoren vorbeibewegt. Allenfalls ist das Schaltglied ein tragendes Teil des Aufbaus. Der Aufbau 15 wird mit einem oder mehreren hydraulischen Zylindern 29 auf der Führungsschiene 25 hin- und herbewegt.

Die Schwenkachse 31 liegt im Zentrum des Bogens der Führungsschiene 25 und in Bodennähe, bzw. in oder unter der Geländeebene. Im Beispiel in den Figuren 7 bis 10 liegt die Schwenkachse unter dem Boden, so dass eine Verschwenkung der Last 15 eine Verlagerung der Belastung der Räder 17,18 durch die Last 15 gegen die Bergseite hin bewirkt. Dies kompensiert die Verschiebung der Belastung der Räder 17,18 zur Talseite hin durch das Gewicht des Fahrgestells 21. Mit der dargestellten Geometrie ist eine Verschwenkung von insgesamt ca. 40 bis 45 Grad vorgesehen, was in der Regel genügt. Winkel von dreissig Grad oder mehr nach beiden Seiten hin sind jedoch ohne Beeinträchtigung z.B. der Bodenfreiheit möglich. Zwischen Mittelstellung und Endstellung liegt ein Winkel von gut 20 Grad vor, wobei der Winkel, welcher vom mittleren Sensor Sch5 von seiner mittleren Stellung bis zu seiner deaktivierten Stellung gleich gross ist wie der Winkel zwischen der Stellung des Sensors Sch3 oder Sch4 in Mittelstellung bis zur Endstellung. Der Schwenkbereich umfasst den Winkel zwischen der deaktivierten Stellung des Sensors Sch5 auf der einen und auf der anderen Seite des Schaltgliedes 27. Die Höhe des verschwenkten Teils spielt für die Standfestigkeit des Fahrzeugs keine Rolle, so dass die Verschwenkeinrichtung auch eine gewisse Konstruktionshöhe in Anspruch nehmen darf. Die Schwenkbewegung muss daher auch nicht durch die Räder beschränkt sein, denn eine hochliegende Last kann durchaus über die Räder 17,18 hinweg verschwenkt werden.

Steht nun der Aufbau 15 nach rechts verschwenkt auf dem auf horizontalem Untergrund 33 stehenden Chassis 21, wie dies in Figur 7 dargestellt ist, steht der Aufbau 15 nicht mehr im Lot. Die Neigungsschalter N1 und N2 reagieren jedoch auf die Abweichung von der Senkrechten 35 und öffnen jenes Ventil des Zylinders 29, welches eine Verschwenkung nach links (Pfeil 34) bewirkt. In gleicher Lage des Aufbaus 15 bezüglich des Chassis 21, jedoch bezüglich der Vertikalen 35 nach links verschwenkt, weil der Untergrund 33, wie in Fig. 8 dargestellt, stärker geneigt ist, als die Neigung, welche die Verschwenkung korrigiert, reagiert der andere Neigungsschalter N2 und steuert die Ventile des Zylinders 29 so, dass der Aufbau nach rechts (Pfeil 34') verschenkt und senkrecht gestellt wird. Die Verschwenkung in beide Richtungen ist solange möglich, wie der mittlere Sensor Sch5 aktiviert ist.

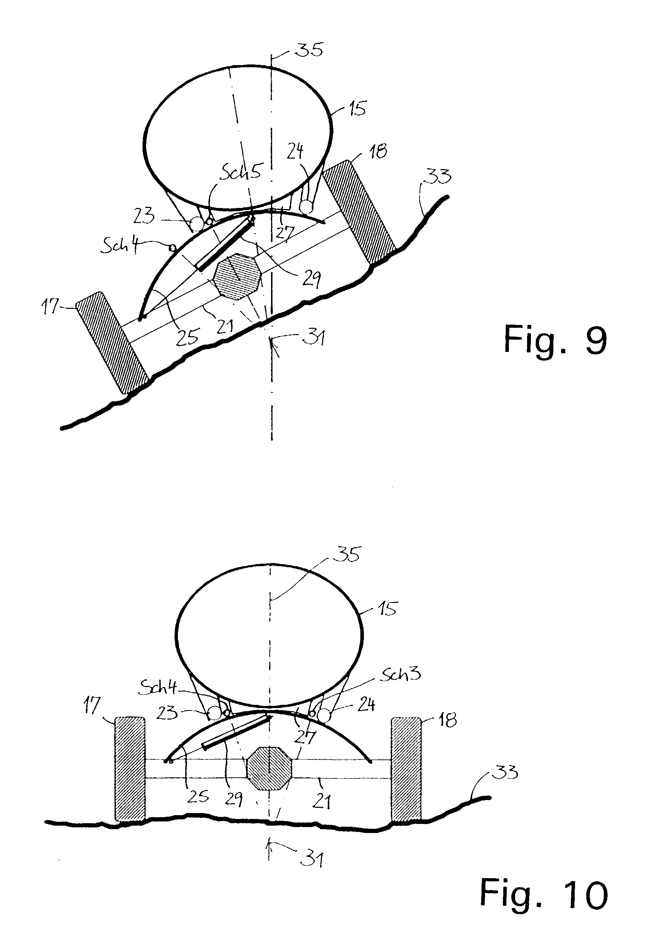

Ist das Gelände 33, wie in Figur 9 dargestellt, steiler als der grösstmögliche Verschwenkungswinkel zwischen Chassis 21 und Aufbau 15 es erlaubt auszugleichen, so gerät der Aufbau 15 in eine Endposition. In dieser ist es wünschenswert, dass das geöffnete Ventil des Zylinders 29, welches eine Verschwenkung über diese Endstellung hinaus nach rechts bewirken möchte, nicht weiter geöffnet bleibt, sondern trotz aktiviertem Neigungsschalter geschlossen wird. Dies geschieht über die Sensoren Sch3 bis Sch5, von welchen in dieser Lage lediglich der die Verschwenkung nach links freigebende Sensor Sch3 aktiviert ist.

Zudem ist es wünschenswert, dass der Aufbau in eine Normalposition gestellt werden kann, wie sie in Figur 10 dargestellt ist, und dies unabhängig von der Neigung des Untergrundes. In dieser Stellung sind zweckmässigerweise die beiden Sensoren Sch3 und Sch5 deaktiviert.

Figur 11 zeigt ein mögliches Schaltschema, mit welchem die gewünschte Funktionsweise erreicht wird. Ein Schalter 1 weist drei Positionen auf: Die Position H für Handbetrieb, die Position A für Automatikbetrieb der Verschwenkung, und Position Z für die automatische Mittelstellung, d.h. das automatische Verschwenken des Aufbaus 15 in die mittlere Normalposition unabhängig von der Neigung des Chassis 21. Bei Position H des Schalters Sch1 wird die Spannung von der Batterie B auf den Schalter Sch2 geleitet, welcher wieder drei Positionen hat: R für Verschwenken nach rechts, 0 für keine Verschwenkbewegung und die Position L für eine Verschwenkung nach links. In den Positionen L und R des Schalters Sch2 werden die Magnetventile M1 und M2 des Zylinders 29 direkt über die entsprechenden Relais R1 und R2 angesteuert.

In der Position A des Schalters Sch1 wird Spannung auf alle drei Näherungsschalter Sch3, Sch4, Sch5 gegeben, wobei die Annäherung des Schalters an das Schaltglied 27 (siehe Figuren 1 bis 4) diesen aktiviert, d.h. schliesst. Zudem wird in dieser Position A die links und die rechts von den Sensoren Sch3 bis Sch5 weggehenden Ausgangsspannungen in den Leitern 37 und 38 in zwei Schaltstellen 39,40 mitgeschaltet. In der Position A wird die Ausgangsspannung auf die Neigungsschalter N1 und N2 gegeben, in der Position Z auf die Relais R1 und R2.

Ist nun der mittlere Schalter Sch5 aktiviert, ist Spannung auf beiden Leitern 37 und 38. Eine Korrektur der Lage des Aufbaus 15 wird nun allein aufgrund der Stellung der Neigungsschalter N1,N2 getätigt. Sind beide Neigungsschalter offen, geschieht keine Korrektur. Ist der Neigungsschalter N2 aufgrund einer Abweichung des Aufbaus 15 von der Senkrechten nach links (Fig. 8) geschlossen, wird das Ventil M2 aktiviert und der Kolben 30 entsprechend aus dem Zylinder 29 gestossen. Dadurch wird eine Verschwenkung nach rechts erreicht (Pfeilrichtung 34'), bis beide Neigungsschalter wieder offenstehen, oder bis der Sensor Sch5 nicht mehr aktiviert ist. In der Endstellung (Fig. 9) ist letzteres der Fall. Dann ist lediglich noch der Schalter Sch3 aktiviert, was lediglich eine Verschwenkung nach links erlaubt, und dies nur bei Aktivierung des Neigungsschalters N1. Solange also in der Endstellung rechts der Neigungsschalter N1 offen ist, geschieht keine Verschwenkung. Auf dem Neigungschalter N2 ist keine Spannung, da weder der Sensor Sch4 noch Sch5 aktiviert ist.

Bei der Stellung Z des Schalters Sch1 sind lediglich die beiden Sensoren Sch3 und Sch4 unter Spannung. Mit Dioden ist der Sensor Sch5 von den Leitern zu und von den Sensoren Sch3 und Sch4 getrennt. Die Ausgangsspannung dieser Sensoren ist über die Schaltstellen 39 und 40 auf die Relais R1 und R2 geleitet. Daher wirkt sich eine Aktivierung des Sensors Sch3 in einer Verschwenkung nach links, eine Aktivierung des Sensors Sch4 in einer Verschwenkung nach rechts aus.

Ähnlich ist die Schaltung in den Figuren 12 und 13 ausgelegt. Hier sind die beiden Ausgangsleiter 37,38 der Sensoren Sch3 und Sch4 lediglich je auf die Spule eines Relais R3 bzw. R4 geführt, welches den Neigungsschaltern N1 bzw. N2 nachgeschaltet ist. Deshalb kann auf die Schaltstellen 39 und 40 von Figur 11 verzichtet werden. Die stärker ausgezogenen Linien stellen Leiter dar, welche mit dem Pluspol der Spannungsquelle B verbunden sind. In Figur 12 ist der Schalter Sch1 auf Position A. Die Neigungsschalter N1 und N2 wie auch alle drei Sensoren Sch3,Sch4,Sch5 sind an die Spannungsquelle B angeschlossen. Die dargestellte Schaltsituation entspricht der Transporterstellung gemäss Figur 8. Der Sensor Sch4 und der Neigungsschalter N1 (bei Neigung nach rechts aktiviert) ist nicht aktiviert. Da der Sensor Sch5 aktiviert ist, sind beide Relais R3 und R4 geschlossen und es wäre daher eine Verschwenkung in beide Richtungen möglich. Jedoch verursacht der aufgrund der Abweichung von der Senkrechten 35 aktivierte Neigungsschalter N2 eine Verschwenkung nach rechts.

In Figur 13 ist das Schaltschema aus Figur 12 nochmals dargestellt, jedoch bei der Schalterposition Z des Schalters Sch1 für automatische Mittelstellung des Lastenaufbaus. Es sind demnach lediglich die Sensoren Sch3 und Sch4 unter Spannung. Die Neigungsschalter N1 und N2 sind umgangen. Nun wird eine Verschwenkung allein aufgrund der Aktivierung der Sensoren Sch3 und Sch4 ausgeführt. Im dargestellten Fall ist der Sensor Sch3 aktiviert, d.h. der Aufbau 15 ist in einer nach rechts verschwenkten Lage bezüglich der Normalstellung (siehe Figur 3). Nun wird aufgrund der Aktivierung des Sensors Sch3 der Aufbau nach links verschwenkt, denn der Sensor Sch3 schliesst das Relais R3, worauf Spannung auf das Relais R1 gelangt und daher auch R1 geschlossen wird. Dadurch wird das Magnetventil M1 an die Spannungsquelle angeschlossen und daher eine Verschwenkung nach links erwirkt. Sind dann beide Sensoren Sch3 und Sch4 deaktiviert (Figur 10), sind die Relais R3 und R4, und dadurch auch die Relais R1 und R2 geöffnet und die Ventile M1 und M2 daher geschlossen.

In analoger Weise sind auch Lagekorrekturen nach Vorne und Hinten steuerbar. Es braucht dazu lediglich z.B. eine zweite Verschwenkvorrichtung, welche in 90 Grad gedrehter Richtung unter oder auf die erste Verschwenkvorrichtung 17 gebaut ist.

Zusammenfassend kann gesagt werden, dass bei einem Fahrzeug, z.B. einem Transporter 11 oder einem Motormäher 11', wie er in der Landwirtschaft insbesondere in Berggebieten auf geneigtem Gelände eingesetzt wird, erfindungsgemäss eine Schwenkeinrichtung zum Verschwenken des Lastenaufbaus, z.B. von Druckfass oder Mistzetter, und/oder des Motors vorgesehen ist. Durch eine elektrische oder elektronische Steuerung, z.B. mit Neigungsschaltern an dem gegenüber dem Fahrwerk verschwenkbaren Teil, wird der Aufbau und/oder Motor automatisch derart verschwenkt und nach der Senkrechten (35) ausgerichtet (Pfeil 34'), dass die Senkrechte durch den Schwerpunkt des Aufbaus innerhalb eines bestimmten maximalen Neigungswinkels nahe der Mitte zwischen den linken und rechten Rädern 17,18 die Standfläche 33 des Fahrzeugs kreuzt.

## Patentansprüche

1. Verfahren zur Verminderung der Gefahr des Kippens eines Fahrzeugs mit einem Fahrgestell mit Rädern und einem verschwenkbaren Teil (15,15'), z.B. einem Motor, einer Fahrerkabine, Bedienungselementen und/oder einem Lastenaufbau, bei welchem Verfahren der verschwenkbare Teil (15,15') je nach der Richtung der auf das Fahrzeug (11) wirkenden Schwer-/Fliehkraft um eine Achse (31) verschwenkt wird und dadurch seine Lage auf die Richtung (35) der auf das Fahrzeug (11) wirkenden Kraft wenigstens annähernd ausgerichtet wird, um die Standfestigkeit des Fahrzeugs zu erhöhen, dadurch gekennzeichnet, dass der verschwenkbare Teil (15,15') und das Fahrgestell (21) mit Rädern (17,18) entlang wenigstens einer Schiene (25;25',25") derart gegeneinander verschoben werden, dass dabei der verschwenkbare Teil (15,15') um eine Schwenkachse (31) verschwenkt wird, die zwischen Fahrgestell (21) und einer Geländeebene, welche die Räder (17,18) gegenüber dem verschwenkbaren Teil (15,15') tangiert, in dieser Ebene oder vorzugsweise in einem Nahbereich jenseits dieser Ebene verläuft.

2. Verfahren nach Anspruch 1, dadurch gekennzeichnet, dass mit Sensoren (N1,N2) die Richtung der Schwer/Fliehkraft wenigstens qualitativ ermittelt wird und eine Verschwenkung (Pfeile 34,34') des verschwenkbaren Teils (15,15') entsprechend dieser Richtung automatisch ausgeführt wird.

3. Verfahren nach Anspruch 2, dadurch gekennzeichnet, dass die Sensoren (N1,N2) mit dem verschwenkbaren Teil (15) mitverschwenkt werden und lediglich eine Abweichung der Lage der Sensoren (N1,N2) von der Solllage gegenüber der Schwer-/Fliehkraft feststellen, wobei eine solche Abweichung automatisch solange ein Verschwenken (Pfeile 34,34') des Sensors (N1,N2) auslöst bis der Sensor, und mit diesem auch der verschwenkbare Teil (15,15'), in Solllage gegenüber der Schwer/Fliehkraft steht.

4. Verfahren nach einem der Ansprüche 1 bis 3, dadurch gekennzeichnet, dass mit elektrischen und/oder elektronischen Mitteln, welche Neigungssensoren (N1,N2), z.B. Quecksilberschalter aufweisen, ein Verschwenkmechanismus (19) gesteuert wird.

5. Schwenkeinrichtung (19) zur Verminderung der Gefahr des Kippens von Fahrzeugen mit einem Fahrgestell (21), Rädern (17,18) und einem Aufbau (15) und/oder Motor (15') durch Verschwenken(19) wenigstens eines Teils des Aufbaus (15) und/oder des Motors (15') gegenüber dem Fahrgestell (21) und den Rädern (17,18) abhängig von der Richtung der auf das Fahrzeug (11,11') wirkenden Schwer-/Fliehkraft, gekennzeichnet durch wenigstens eine Schiene (25,25',25") und wenigstens einen mit der Schiene (25,25',25") zusammenwirkenden Wagen oder Schlitten zur Befestigung an Fahrgestell (21) und verschwenkbarem Teil (15,15'), wobei Wagen oder Schlitten entlang der Schiene (25,25',25") verschiebbar sind, und durch die Schiene (25) oder Schienen (25',25") eine Schwenkachse (31) definiert ist, die in mit dem Fahrzeug (11,11') zusammengebauten Zustand der Schwenkeinrichtung (19) zwischen Fahrgestell (21) und einer Geländeebene, welche die Räder (17,18) gegenüber dem Schwenkteil (15,15') tangiert, in dieser Ebene oder vorzugsweise in einem Nahbereich jenseits dieser Ebene verläuft.

6. Schwenkeinrichtung nach Anspruch 5, dadurch gekennzeichnet, dass die Schwenkachse (31) in einer ersten Richtung verläuft, welche in eingebautem Zustand der Schwenkeinrichtung (19) der Fahrtrichtung des Fahrzeugs (11,11') entspricht.

7. Schwenkeinrichtung nach Anspruch 5 oder 6, gekennzeichnet durch eine Schwenkachse (31), welche in eingebautem Zustand in einer Richtung senkrecht zur Fahrtrichtung des Fahrzeugs (11,11') verläuft.

8. Schwenkeinrichtung nach einem der Ansprüche 5 bis 7, gekennzeichnet durch eine Steuereinheit mit Neigungsschaltern (N1,N2) zur Steuerung der Verschwenkung.

9. Schwenkeinrichtung nach einem der Ansprüche 5 bis 8, gekennzeichnet durch eine elektrische oder elektronische Steuerung der Verschwenkung und wenigstens einen Sensor, vorzugsweise drei Sensoren (Sch3,Sch4,Sch5), zur Erkennung der Position des verschwenkbaren Teils (15,15') gegenüber dem Fahrgestell (21) oder der Schwenkeinrichtung (19).

10. Schwenkeinrichtung nach einem der Ansprüche 5 bis 9, dadurch gekennzeichnet, dass der verschwenkbare Teil (15,15') mit Rollen (23,24) auf einer gewölbten Führungsschiene (25) oder zwei sich kreuzenden Führungsschienen (25',25") gelagert ist.

11. Motorfahrzeug mit einer Schwenkeinrichtung (19) nach einem der Ansprüche 5 bis 10, gekennzeichnet durch eine oder mehrere hydraulische Pumpen am Motor (13) und wenigstens einem damit verbundenen hydraulischen Motor (22) für Antriebsräder (17,18) und/oder einem hydraulischen Motor oder Kolben für ein Arbeitsgerät und/oder wenigstens einem hydraulischen Motor oder Kolben (29,29',29",30) für die Verschwenkung des verschwenkbaren Teils.

12. Motorfahrzeug nach Anspruch 11, mit einer Verstellpumpe und einer Füllpumpe für die Verstellpumpe, dadurch gekennzeichnet, dass für die Verschwenkung des verschwenkbaren Teils wenigstens ein von der Füllpumpe gespeister Kolben vorgesehen ist.

13. Einachsiges, fahrbares Gerät nach Anspruch 11 oder 12, dadurch gekennzeichnet, dass der Motor (15') und die Bedienungs- und Steuerelemente zusammen mit dem Motor (13) gegenüber dem Fahrgestell (21) verschwenkbar sind.
